# EUROPÄISCHE PATENTSCHRIFT

(11) **EP 1 452 265 B1**
(45) Veröffentlichungstag und Bekanntmachung des Hinweises auf die Patenterteilung: **20.04.2005**
(21) Anmeldenummer: 03004123.0
(22) Anmeldetag: 26.02.2003
(51) Int. Cl.: B23Q 1/01, B23Q 37/00

(54) **Grundgestell für eine Handhabungsvorrichtung und Handhabungsvorrichtung**
Base platform for a manipulation device and manipulation device
Plateforme de base pour un système de manipulation et système de manipulation

(43) Veröffentlichungstag der Anmeldung: 01.09.2004
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Steil, Christian, Dipl.-Ing.

(56) Entgegenhaltungen:
- EP-A- 0 865 869
- US-A- 5 353 490
- US-A1- 2002 108 836

## Beschreibung

Die vorliegende Erfindung betrifft ein Grundgestel gemäss dem Oberbegriff des Anspruchs 1 (siehe, z.B., US-2002/0108836-A) für eine Handhabungsvorrichtung, insbesondere für eine Automationszelle, die zum Verbund mit wenigstens einer Werkzeugmaschine ausgelegt ist.

Ferner betrifft die vorliegende Erfindung eine derartige Handhabungsvorrichtung.

Auf dem Gebiet der Werkzeugmaschinen besteht seit einigen Jahren ein starker Trend zu einer vollautomatischen Fertigung. Um dabei einen unterbrechungsfreien Betrieb der Werkzeugmaschinen zu gewährleisten, werden Handhabungsvorrichtungen in Form von sogenannten Automationszellen bereitgestellt. Die Automationszellen werden mit den Werkzeugmaschinen häufig über Portale verbunden und dienen dazu, der Werkzeugmaschine zu bearbeitende Werkstücke zuzuführen bzw. bearbeitete Werkstücke von der Werkzeugmaschine abzuführen. Die Automationszellen sind zu diesem Zweck mit einem Bereitstellungsmodul versehen.

Über das Bereitstellungsmodul können Werkstücke kontinuierlich bereitgestellt werden (beispielsweise mittels Stau- oder Taktbändern). Dieser Ansatz wird insbesondere bei der Verkettung von Arbeitsprozessen verfolgt. Ferner können Werkstücke der Automationszelle auch über Palettenmodule oder Schubladenmodule bereitgestellt werden. Bei den Palettenmodulen werden über Palettentransportwagen jeweils Stapel von Paletten in Form von Werkstückträgern angefördert (häufig von Hand), bzw. es werden Palettenstapel mit bearbeiteten Werkstücken von Hand mittels eines Palettentransportwagens abtransportiert.

Die Automationszelle dient demzufolge als Puffer für der Werkzeugmaschine zuzuführende unbearbeitete Werkstücke als auch als Puffer für von der Werkzeugmaschine bearbeitete, abzutransportierende Werkstücke.

Die Automationszellen werden in der Regel speziell für die Kombination mit einer bestimmten Werkzeugmaschine konstruiert und hergestellt. Durch diese Maßnahme kann die Automationszelle für die jeweiligen Arbeitsabläufe optimiert werden. Der konstruktive Aufwand ist jedoch recht erheblich. Ferner ist ein Umbau der Automationszelle, wie er beispielsweise bei einem Wechsel auf eine neue Werkzeugmaschinengeneration notwendig wird, nur schwierig zu bewerkstelligen. Derartige Umbauten erfolgen daher in der Regel beim Hersteller der Automationszellen.

Beispiele derartiger Automationszellen sind bekannt aus der DE 42 12 178 A1 oder aus der US 5,353,490. Auch aus der DE 101 02 413 C1 ist eine derartige, speziell angefertigte Automationszelle bekannt.

Ferner gibt es Ansätze (z.B. DE 41 17 439 A1), den Aufbau der Automationszelle flexibel zu gestalten. Bei diesem Stand der Technik wird das Gestell der Automationszelle aus Strangpressprofilen (in der Regel Aluminium) zusammengesetzt, die in an sich bekannter Weise T-Nuten aufweisen. Demzufolge lassen sich durch Ablängen der Strangpressprofile und Verbinden derselben nach der Art von Riegel-Pfosten-Konstruktionen beliebige Gestelle zusammenstellen. Ferner soll es möglich sein, eine Basiseinheit für verschiedene Anwendungsfälle modular zu erweitern.

Die in der DE 41 17 439 A1 offenbarte Basiseinheit weist im Wesentlichen ein Untergestell aus Strangpressprofilen auf, oberhalb dessen eine Transferstrecke eingerichtet ist. Oberhalb des Untergestells ist ein quaderförmiges Gestell für eine Umhüllung vorgesehen. Ein Portalroboter ist auf einer Tischplatte montiert, die das Untergestell von dem Umhüllungsgestell trennt. Eine Steuereinheit ist von außen seitlich an das Untergestell angebracht.

Die Langzeitstabilität solcher Gestelle aus Strangpressprofil ist leider nicht immer zufriedenstellend. Ferner ergibt sich insbesondere durch die Anbringung von Funktionselementen außen an dem Gestell ein erhöhter Raumbedarf.

Aus der EP 0 865 869 B1 ist schließlich eine Automationszelle zur Handhabung von Werkstücken bekannt, die einen etwa quaderförmigen Sockel nach der Art eines Maschinenbettes aufweist. Der Sockel weist eine Vielzahl von Schnittstellen bzw. Befestigungspunkten auf, die schachbrettmusterartig auf seiner Oberfläche und seinen Seitenflächen angeordnet sind. Das Sockelmodul erlaubt somit, an verschiedenen Stellen Gestellelemente und/oder Funktionsmodule zu befestigen, um eine modulare Bauweise der Automationszelle zu ermöglichen. Eine auf dem Sockel aufbauende Automationszelle weist an den vier Ecken des Sockels vertikale Pfosten gleicher Höhe auf, an deren Oberseite ein Portalmodul festgelegt ist. Die Automationszelle ist von außen in an sich üblicher Weise verkleidet. Im Inneren der Verkleidung befindet sich in einer Ecke des Innenraumes eine Steuereinheit. Die Steuereinheit muss daher mit einem eigenen Gehäuse versehen sein, um die darin enthaltene elektrische, pneumatische und/oder hydraulische Ausrüstung vor Verschmutzungen, Öl etc. zu schützen.

Vor dem obigen Hintergrund besteht das der Erfindung zu Grunde liegende Problem darin, ein Grundgestell für eine modular aufbaubare Handhabungsvorrichtung anzugeben, das eine hohe Stabilität aufweist, den Aufbau von Automationszellen mit geringem Bauvolumen ermöglicht und eine besonders hohe Flexibilität beim Aufbau bzw. Umbau von Automationszellen gewährleistet.

Diese Aufgabe wird gelöst durch ein Grundgestell für eine modular aufbaubare Handhabungsvorrichtung, insbesondere für eine Automationszelle, die zum Verbund mit wenigstens einer Werkzeugmaschine ausgelegt ist, mit
- einer Vorderwand, einer Rückwand und Seitenwänden, die einen Steuerungsraum für eine Steuereinrichtung einschließen, wobei oberhalb des Steuerungsraumes eine Prozessplattform eingerichtet ist,
- wobei die Vorderwand wenigstens eine mechanische Schnittstelle zum Festlegen eines Bereitstellungsmoduls aufweist, das zum Bereitstellen von Werkstücken dient, und
- wobei die Rückwand einen oberen Rückwandteil aufweist, der über die Prozessplattform hinausragt und an seiner zur Prozessplattform weisenden Vorderseite eine erste Mehrzahl von mechanischen Schnittstellen zum örtlich variablen Festlegen eines Prozessmoduls zum Handhaben und/oder Bearbeiten von bereitgestellten Werkstücken aufweist, wobei das obere Rückwandteil ferner eine Öffnung aufweist, die oberhalb der Prozessplattform angeordnet ist.

Ferner wird die obige Aufgabe durch eine Handhabungsvorrichtung mit einem derartigen Grundgestell gelöst.

Die vorliegende Erfindung geht von dem Gedanken aus, ein für beliebige Anwendungsfälle universell einsetzbares Grundgestell anzugeben. Hierdurch kann zum einen die Herstellung der Automationszellen vereinfacht werden.

Das Grundgestell weist einen Steuerungsraum für eine bei jeder Automationszelle benötigte Steuereinrichtung auf. Dieser Steuerungsraum ist allseits durch das Grundgestell selbst umschlossen, so dass ein separates Gehäuse für die Steuereinrichtung nicht notwendig ist. Ferner kann das Grundgestell besonders verwindungssteif ausgebildet werden. Die Handhabung und Bearbeitung von Werkstücken kann oberhalb des Steuerungsraumes, also oberhalb der Prozessplattform, erfolgen. Das Bereitstellen von Werkstücken kann von der Vorderseite her erfolgen. Zu diesem Zweck ist eine mechanische Schnittstelle zum Festlegen eines Bereitstellungsmoduls vorgesehen.

Bei alternativen Anwendungen kann die Bereitstellung von Werkstücken jedoch auch auf einer Ebene parallel zu Prozessplattform von der Seite erfolgen. Durch das Bereitstellen einer Öffnung in dem oberen Rückwandteil kann eine Bereitstellung von Werkstücken ferner von der Rückseite her erfolgen.

Durch das Vorsehen einer Mehrzahl von mechanischen Schnittstellen an der Vorderseite des oberen Rückwandteiles kann ein Prozessmodul an einem beliebigen Ort angebracht werden. Beispielsweise kann demzufolge an der Rückwand ein Portal zur Verbindung mit der Werkzeugmaschine angebracht werden. Zusätzlich kann dort ein Roboter, insbesondere ein Knickarm-Roboter, angebracht werden. Demzufolge kann die gesamte Prozessplattform für die Zu- und Abfuhr von Werkstücken bzw. für das Anordnen von Bearbeitungsmodulen zum Bearbeiten von Werkstücken verwendet werden.

Es versteht sich jedoch, dass ein Roboter auch auf der Prozessplattform angeordnet werden kann, wenn dies aus applikationsspezifischen Gründen sinnvoller ist.

Insgesamt wird somit ein Grundgestell für eine Automationszelle geschaffen, das besonders stabil ausgebildet werden kann, ein minimales Bauvolumen der Automationszelle insgesamt ermöglicht und eine besonders hohe Flexibilität zum Aufbau der unterschiedlichsten Typen von Handhabungsvorrichtungen für die unterschiedlichsten Anwendungsfälle bereitstellt.

Die obige Aufgabe wird somit vollkommen gelöst.

Gemäß einer besonders bevorzugten Ausführungsform ist das obere Rückwandteil als Rahmen ausgebildet, an dessen Vorderseite eine Schnittstellenplatte festgelegt ist, die die erste Mehrzahl von mechanischen Schnittstellen aufweist.

Durch das Ausbilden des oberen Rückwandteils als Rahmenkonstruktion wird eine besonders hohe Stabilität erzielt. Es versteht sich dabei, dass der Rahmen vorzugsweise als starrer Rahmen ausgebildet ist, also beispielsweise durch Verschweißen von Pfosten- und Riegel-Elementen hergestellt ist.

Durch das Bereitstellen einer separaten Schnittstellenplatte lässt sich das Grundgestell zudem einfach montieren.

Gemäß einer weiteren bevorzugten Ausführungsform ist das obere Rückwandteil als Rahmen ausgebildet und wenigstens ein Rahmenteil ist als Hohlprofil zur Aufnahme von Kabelsträngen ausgebildet.

Hohlprofile können mit hoher Stabilität ausgeführt werden. Durch das Aufnehmen von Kabelsträngen in dem Hohlprofil können beispielsweise die Prozessmodule über verborgene Leitungen mit der Steuereinrichtung verbunden werden. "Kabelsalat" wird demzufolge vermieden, insbesondere in dem Bereich oberhalb der Prozessplattform.

Dabei ist es von besonderem Vorzug, wenn zwei seitliche Rahmenpfosten des oberen Rückwandteils als Hohlprofile zur Aufnahme von Kabelsträngen ausgebildet sind.

Bei dieser Ausführungsform lässt sich eine Verbindung zwischen dem Bereich der ersten Mehrzahl von mechanischen Schnittstellen und der Steuereinrichtung konstruktiv besonders einfach realisieren.

Ferner ist es dabei von Vorteil, wenn die Rückwandöffnung seitlich durch die Rahmenpfosten begrenzt ist.

Durch diese Maßnahme lässt sich die Rückwandöffnung konstruktiv ohne zusätzlichen Aufwand realisieren.

Gemäß einer weiteren bevorzugten Ausführungsform weist wenigstens ein Hohlprofil des oberen Rückwandteils eine Kabelöffnung zur Durchführung eines Kabelstranges auf, um den Steuerungsraum (und damit eine darin später montierte Steuereinrichtung) mit einem Prozessmodul zu verbinden.

Von besonderem Vorzug ist es dabei, wenn Kabelöffnungen an jenen Seiten der Rahmenpfosten vorgesehen sind, die zur Rückwandöffnung hin weisen.

Hierdurch kann auch eine Verbindung des Steuerungsraumes mit Prozessmodulen auf einfache Weise erfolgen, die im Bereich der Prozessplattform angeordnet sind.

Insgesamt ist es besonders vorteilhaft, wenn auf der Prozessplattform eine Prozessplatte angeordnet ist, die eine zweite Mehrzahl von mechanischen Schnittstellen zum örtlich variablen Festlegen eines Prozessmoduls zum Handhaben und/oder Bearbeiten von bereitgestellten Werkstücken aufweist.

Durch diese Maßnahme ergibt sich eine besonders hohe Variabilität und Flexibilität beim Anordnungen von Prozessmodulen innerhalb der Automationszelle. Es versteht sich, dass die Schnittstellen der Prozessplatte von einem identischen Typ wie die Schnittstellen der Schnittstellenplatte ausgebildet sein sollten.

Gemäß einer weiteren bevorzugten Ausführungsform ist die Prozessplatte durch die Öffnung in der Rückwand hindurch montierbar.

Dies ermöglicht eine flexible Anpassung der Automationszelle an unterschiedliche Bearbeitungs- und/oder Handhabungsaufgaben vor Ort. Ferner wird hierdurch die Vormontage und Wartung solcher Prozessmodule erleichtert, da diese gemeinsam mit der Prozessplatte durch die Rückwandöffnung hindurch entfernbar sind.

Vorteilhaft ist es ebenfalls, wenn an der zur Prozessplattform weisenden Vorderseite des oberen Rückwandteils eine nach vorn auskragende Konsole montiert ist, deren Unterseite wenigstens eine weitere mechanische Schnittstelle zum Festlegen eines Prozessmoduls zum Handhaben und/oder Bearbeiten von bereitgestellten Werkstücken aufweist.

Hierdurch ist es möglich, ein Prozessmodul, insbesondere einen Knickarm-Roboter, von unten an der Konsole festzulegen, wodurch sich insgesamt eine noch höhere Flexibilität bei der Anordnung der Prozessmodule ergibt.

Durch die hierdurch mögliche optimierte Anordnung der Prozessmodule kann die Handhabungs- und/oder Bearbeitungsleistung der Automationszelle ebenfalls optimiert werden.

Ferner ist es vorteilhaft, wenn sich von der Vorderwand zwei Füße nach vorn erstrecken.

Hierdurch wird eine erhöhte Stabilität, insbesondere gegenüber Kippmomenten erzielt, die durch Anbringung von Prozessmodulen an der Vorderseite des oberen Rückwandteils und/oder an der auskragenden Konsole auftreten.

Es versteht sich dabei, dass es aus Stabilitätsgründen von besonderem Vorteil ist, wenn die zwei Füße starr mit dem Grundgestell, insbesondere mit dessen Rückwand, verbunden sind, um die erhöhten Kippmomente aufnehmen zu können.

Dabei ist es von besonderem Vorteil, wenn oberhalb der Füße und in Verlängerung der Seitenwände Einfassungswände angeordnet sind, die einen Bereitstellungsraum für ein Bereitstellungsmodul seitlich einfassen.

Durch diese Maßnahme wird ein im Wesentlichen dreiseitig umschlossener Bereitstellungsraum geschaffen, der gegenüber Einwirkungen von außen geschützt ist.

Insgesamt ist es ferner von Vorteil, wenn an der Vorderwand des Grundgestells eine Kabelöffnung zur Durchführung eines Kabelstranges vorgesehen ist, um das Bereitstellungsmodul mit dem Steuerungsraum zu verbinden.

Hierdurch kann ein Bereitstellungsmodul, das in dem Bereitstellungsraum vor der Vorderseite angeordnet wird, ohne Kabelsalat mit einer Steuereinrichtung verbunden werden.

Bei der erfindungsgemäßen Handhabungsvorrichtung ist es von besonderem Vorteil, wenn das Grundgestell ein Gehäuse lagert, das einen Bereitstellungsraum vor der Vorderwand und einen Prozessraum oberhalb der Prozessplattform einschließt.

Das Gehäuse dienst somit zum Umschließen des Handhabungs- und Bereitstellungsraumes innerhalb der Handhabungsvorrichtung, insbesondere zum Personenschutz.

Dabei ist es von besonderem Vorteil, wenn das Gehäuse einen vor dem Bereitstellungsraum angeordneten Türrahmen aufweist, an dem eine Tür gelagert ist.

Hierdurch wird auch im fertig montierten Zustand der Handhabungsvorrichtung gewährleistet, dass insbesondere für Wartungspersonal ein erleichterter Zugang in den Prozessraum möglich ist.

Ferner ist es bevorzugt, wenn das Gehäuse wenigstens eine Seitenabdeckung zum seitlichen Abdecken des Prozessraumes aufweist.

Es versteht sich dabei, dass die Seitenabdeckung und/oder die Tür mit Fenstern zum Beobachten des Prozessraumes versehen sein können.

Ausführungsbeispiele der Erfindung sind in der Zeichnung dargestellt und werden in der nachfolgenden Beschreibung näher erläutert. Es zeigen:
- Fig. 1: eine perspektivische schematische Ansicht eines Grundgestells gemäß der vorliegenden Erfindung von schräg vorne;
- Fig. 2: eine perspektivische schematische Ansicht des Grundgestells der Fig. 1 von schräg hinten;
- Fig. 3: eine schematische Explosionsdarstellung einer auf dem Grundgestell der Fig. 1 und 2 aufbauenden erfindungsgemäßen Handhabungsvorrichtung;
- Fig. 4: die Handhabungsvorrichtung der Fig. 3 in zusammengebautem Zustand in Verbindung mit einem Portal zum Zuführen von Werkstücken in eine zugeordnete Werkzeugmaschine; und
- Fig. 5: eine schematische Darstellung der mit dem erfindungsgemäßen Grundgestell realisierbaren Möglichkeiten des Zuführens und Abführens von Werkstücken.

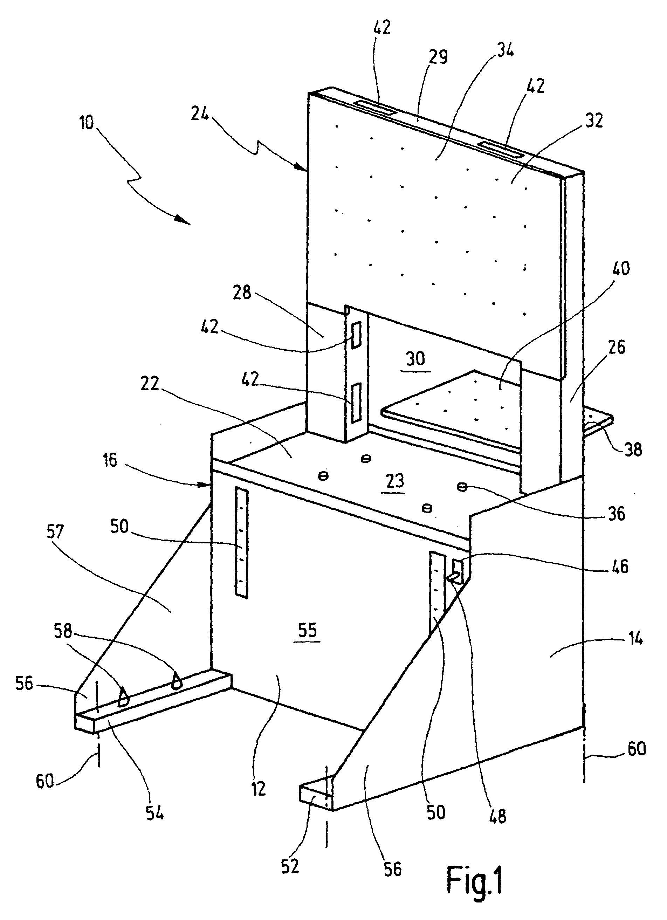

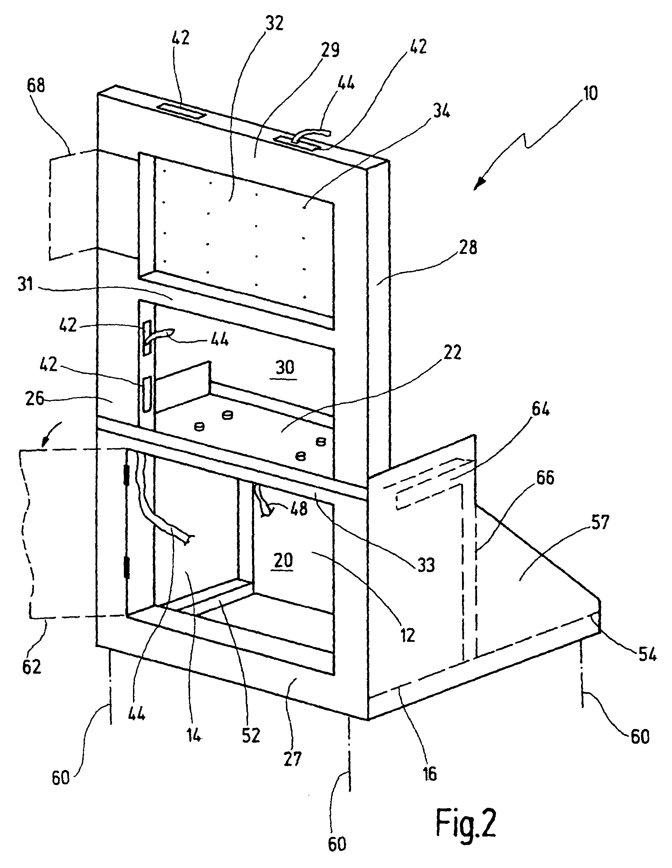

In den Fig. 1 und 2 ist ein Ausführungsbeispiel eines erfindungsgemäßen Grundgestells generell mit 10 bezeichnet.

Das Grundgestell 10 weist eine Vorderwand 12, zwei Seitenwände 14, 16 und eine Rückwand 18 auf, die einen Steuerungsraum 20 zur Aufnahme einer nicht dargestellten Steuereinrichtung für die Handhabungsvorrichtung einschließen.

Oberhalb des Steuerungsraums 20 ist eine Prozessplattform 22 vorgesehen, die den Steuerungsraum 20 von oben her abschließt. Oberhalb der Prozessplattform 22 ist ein Prozessraum 23 zum Handhaben und/oder Bearbeiten von Werkstücken eingerichtet.

Die Rückwand 18 weist einen oberen Rückwandteil 24 auf, der sich über die Prozessplattform 22 hinaus erstreckt.

Die Rückwand 18 ist als stabile Rahmenkonstruktion mit zwei vertikalen Rahmenpfosten 26, 28 ausgebildet.

Die Rahmenpfosten 26 sind an ihrem oberen Ende durch einen oberen Riegel 26 miteinander verbunden. In einem mittleren Bereich zwischen dem oberen Riegel 29 und der Prozessplattform 22 ist ein mittlerer Riegel 31 vorgesehen, der die Rahmenpfosten 26, 28 miteinander verbindet.

Auf Höhe der Prozessplattform 22 ist ein weiterer unterer Riegel 33 vorgesehen. An ihrem unteren Ende sind die zwei Rahmenpfosten 26, 28 über einen Bodenriegel 27 miteinander verbunden.

Die Rahmenpfosten 26, 28 und die Riegel 27, 29, 31, 33 sind als Hohlprofile ausgebildet, vorzugsweise aus Stahl hergestellt und sind starr miteinander verbunden, beispielsweise durch Schweißen.

An der Vorderseite des oberen Rückwandteils 24 ist eine Schnittstellenplatte 32 angebracht, die eine Vielzahl von regelmäßig verteilten Befestigungspunkten bzw. Schnittstellen 34 bereitstellt.

Die Schnittstellenplatte 32 erstreckt sich von dem oberen Riegel 29 bis zu dem mittleren Riegel 31.

Durch den mittleren Riegel 31, den unteren Riegel 33 und die Rahmenpfosten 26, 28 wird eine Rückwandöffnung 30 definiert.

Auf der Prozessplattform 22 sind Lagermittel 36 zum Lagern einer Prozessplatte 38 vorgesehen. Die Prozessplatte 38 ist so dimensioniert, dass sie horizontal durch die Rückwandöffnung 30 hindurch auf die Prozessplattform 22 aufgesetzt werden kann. Die Lagermittel können wie im dargestellten Fall durch einzelne Aufnahmepunkte gebildet sein. In gleicher Weise ist es jedoch auch möglich, Längsführungen als Lagermittel vorzusehen, an denen die Prozessplatte 38 eingeschoben werden kann.

Die Prozessplatte 38 ist mit einer Vielzahl von regelmäßig angeordneten Befestigungspunkten bzw. Schnittstellen 40 versehen, die in der Regel identisch aufgebaut sind wie die Schnittstellen 34 der Schnittstellenplatte 32.

An dem durch die Rahmenpfosten 26, 28 und die Riegel 27, 29, 31 und 33 gebildeten Rahmen sind eine Mehrzahl von Kabelöffnungen 42 vorgesehen.

Die Kabelöffnungen 42 ermöglichen es, einen Kabelstrang oder mehrere Kabelstränge 44 durch die Rahmenelemente hindurchzuführen, um nachstehend noch zu erläuternde Prozessmodule mit einer Steuereinrichtung im Inneren des Steuerungsraumes 20 zu verbinden.

In ähnlicher Seite ist an der Vorderwand 12 wenigstens eine Kabelöffnung 46 vorgesehen, um einen Kabelstrang 48 hindurchzuführen. Der Kabelstrang 48 dient zum Verbinden einer Steuereinrichtung im Steuerungsraum 20 mit einem vor der Vorderseite 12 anzuordnenden Bereitstellungsmodul, dessen Funktion nachstehend ebenfalls noch erläutert wird.

In gleicher Weise befindet sich an der Vorderseite 12 eine mechanische Schnittstelle 50 zum Festlegen des Bereitstellungsmoduls.

Von der Rückwand 18 erstrecken sich zwei Füße 52, 54 seitlich nach vorne, und zwar so, dass sie über die Vorderwand 12 hinausragen.

Die Füße 52, 54 dienen insbesondere zum Erhöhen der Kippstabilität des Grundgestells 10. Ferner erstrecken sich von der Vorderwand 12 in Verlängerung der Seitenwände 14, 16 Einfassungsplatten 56 bzw. 57. Durch die Einfassungsplatten 56, 57 und die Vorderwand 12 wird demzufolge ein Bereitstellungsraum 55 zum Anordnungen eines Bereitstellungsmoduls definiert.

Die Einfassungsplatten 56, 67 können einstückig mit den Seitenwänden 14, 16 ausgebildet sein, um die Stabilität des Grundgestells 10 weiter zu erhöhen.

Auf der Oberseite der vorstehenden Teile der Füße 52, 54 können ferner Lagerpunkte 58 zum Lagern eines Bereitstellungsmoduls vorgesehen sein.

Bei 60 sind in schematischer Weise Verankerungspunkte angedeutet, mit denen sich das Grundgestell 10 in konstruktiv üblicher Weise am Boden verankern lässt.

In Fig. 2 ist ferner gezeigt, dass sich die durch den unteren Riegel 33, den Bodenriegel 27 und die Rahmenpfosten 26, 28 gebildete Öffnung des Steuerungsraumes 20 durch eine Tür 62 verschließen lässt, um so den Steuerungsraum allseits abzuschließen.

Zur Erhöhung der Stabilität können zwei Stützrahmenteile 64 vorgesehen sein, die sich von den Rahmenpfosten 26, 28 nach vorne erstrecken und die die Prozessplattform 22 von unten abstützen. Ferner können zur weiteren Erhöhung der Stabilität Vertikalstützen 66 vorgesehen sein, die die freien Enden der Stützrahmenteile 64 auf den Füßen 52 bzw. 54 abstützen.

Bei 68 ist ferner in schematischer Weise angedeutet, dass die Hohlprofilteile des Rahmens der Rückwand 18 über Türen oder ähnliches zumindest abschnittsweise zugänglich sein können, um das Hindurchfädeln von Kabelsträngen zu erleichtern.

Insgesamt ist festzustellen, dass das Grundgestell 10 eine hohe Festigkeit und Stabilität besitzt, und zwar durch die stabile Konstruktion des Rahmens der Rückwand 18 und der Füße 52, 54 sowie optionalerweise der Stützrahmenteile 64 und der Vertikalstützen 66. Diese Elemente sind fest miteinander verbunden (z.B. durch Schweißen) und bilden das "Skelett" des Grundgestells.

Durch das Bereitstellen der Rückwandöffnung 30 ist der Prozessraum 23 von allen vier Seiten frei zugänglich. Hierdurch wird eine hohe Flexibilität hinsichtlich des Bereitstellens und Ausschleusens von Werkstücken sowie hinsichtlich des Zuführens von Werkstücken zu einer Werkzeugmaschine und Rückführens von der Werkzeugmaschine realisiert.

Schließlich ergibt sich durch die Schnittstellenplatte 32 an der Rückwand 18 sowie durch die bevorzugt vorgesehene Prozessplatte 30 mit den jeweiligen Schnittstellen 34, 38 eine große Flexibilität hinsichtlich des Anbringens von Prozessmodulen zum Handhaben und/oder Bearbeiten von Werkstücken.

Da die Prozessplatte 38 über die Öffnung 30 einsetzbar ist, können Prozessmodule an der Prozessplatte 38 vormontiert werden. Hierdurch wird die Montage der auf dem Grundgestell 10 aufbauenden Handhabungsvorrichtung vereinfacht.

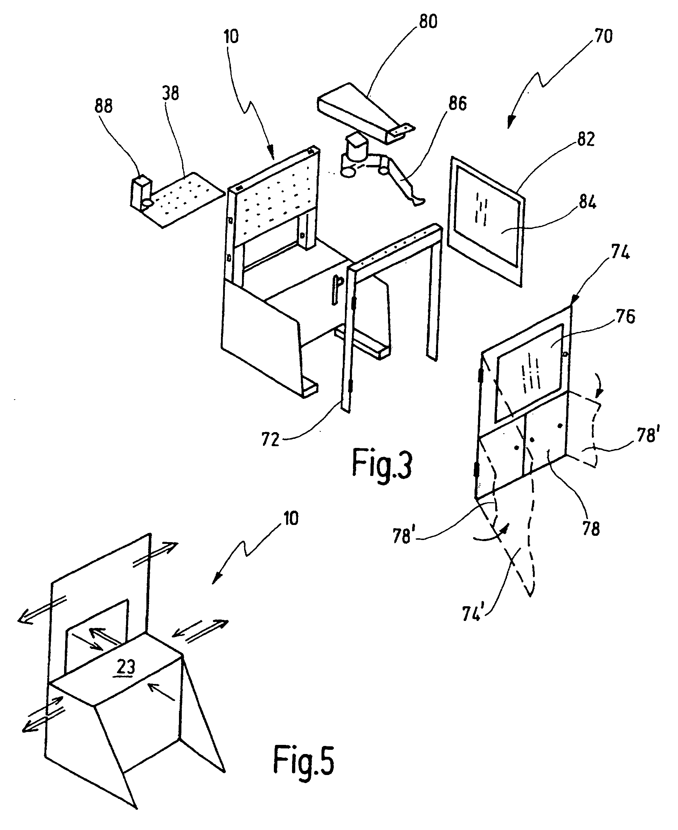

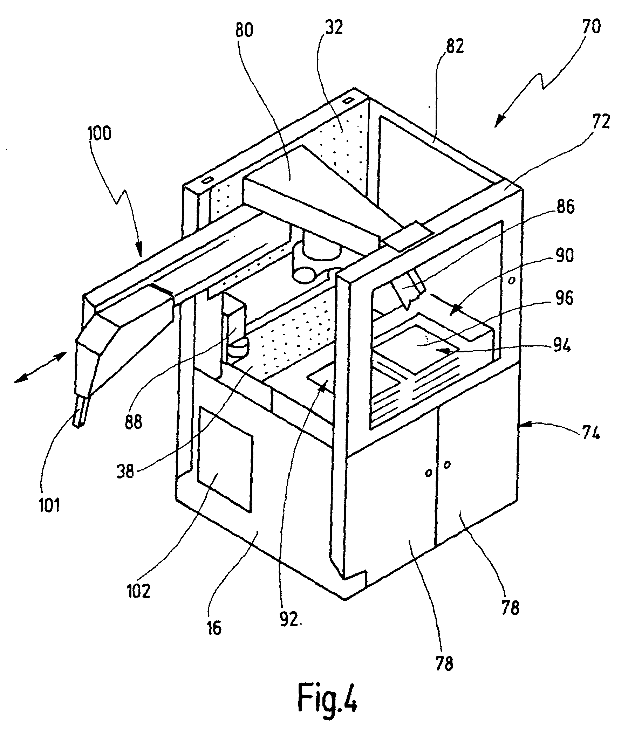

An Hand der Fig. 3 und 4 wird ein typisches Anwendungsbeispiel einer erfindungsgemäßen Handhabungsvorrichtung 70 erläutert, wie sie sich mit dem erfindungsgemäßen Grundgestell 10 aufbauen lässt.

Die Handhabungsvorrichtung 70 der Fig. 3 und 4 basiert auf dem Grundgestell 10 der Fig. 1 und 2. An dem vorderen Ende der Füße 52, 54 wird ein umgekehrt U-förmiger Türrahmen 72 gelagert. Die Oberseite des Türrahmens 72 liegt etwa auf der Höhe der Oberseite der Rückwand 18.

An dem Türrahmen 72 lässt sich eine Tür 74 schwenkbar montieren, wie es schematisch bei 74' in Fig. 3 gezeigt ist.

Die Tür 74 ist horizontal zweigeteilt. Ein oberer Teil weist ein Beobachtungsfenster 76 auf. Der untere Türteil weist zwei nach vorne aufschwenkbare Flügeltüren 78 auf.

Die Flügeltüren 78 lassen sich bei geschlossener Tür 74 öffnen, wie es schematisch bei 78' gezeigt ist.

An der Schnittstellenplatte 32 ist eine nach vorne auskragende Konsole 80 befestigt, und zwar etwa in der Mitte oben. Die Konsole 80 stützt sich an ihrem freien Ende auf der Oberseite des Türrahmens 72 ab.

Die von vorne gesehen rechte Seite der Handhabungsvorrichtung 70 ist mit einer Seitenabdeckung 82 verschlossen, die ein Fenster 84 zum Beobachten des Prozessraumes 23 aufweist.

An der Unterseite der Konsole 80 ist ein Knickarm-Roboter, insbesondere ein 6-Arm-Roboter 86 montiert.

Der Knickarm-Roboter 86 bildet ein Handhabungsmodul zum Handhaben von Werkstücken innerhalb der Handhabungsvorrichtung 70.

Bei 88 ist ein Bearbeitungsmodul in schematischer Weise angedeutet, das auf der Prozessplatte 38 vormontiert worden ist.

Das Bearbeitungsmodul 88 dient beispielsweise zum Ausführen von Vor- oder Nachbearbeitungsprozessen an den Werkstücken, bevor sie in die zugeordnete Werkzeugmaschine überführt werden bzw. hiervon zurückkehren. Bei dem Bereitstellungsmodul 88 kann es sich beispielsweise um ein Entgratungsmodul handeln.

Wie es in Fig. 4 gezeigt ist, ist in dem Bereitstellungsraum 55 ein Bereitstellungsmodul 90 festgelegt.

Das Bereitstellungsmodul 90 dient zur Aufnahme von zwei Palettenstapeln 92, 94, die beispielsweise mittels eines Palettenhandhabungswagens über die Flügeltüren 78 in das Bereitstellungsmodul 90 eingefahren bzw. aus diesem herausgefahren werden können.

Somit befindet sich innerhalb des Bereitstellungsraumes 55 ein erster Stapel 92 von Paletten bzw. Werkstückträgern 96 und ein zweiter derartiger Stapel 94.

Typischerweise enthält der eine Stapel 92 zu bearbeitende Werkstücke, und bearbeitete Werkstücke werden auf dem zweiten Stapel 94 abgelegt.

In Fig. 4 ist ferner gezeigt, dass an der Schnittstellenplatte 34 ein Handhabungsportal 100 montiert ist, das eine Verbindung zu der zugeordneten Werkzeugmaschine schafft.

An der Seite, an der das Handhabungsportal 100 aus der Handhabungsvorrichtung 70 austritt, ist keine Seitenabdeckung 82 montiert. Es versteht sich jedoch, dass alternativ auch eine kleinere Seitenabdeckung 82 montiert werden kann.

Bei 102 ist in Fig. 4 eine Wartungsöffnung gezeigt, um unmittelbaren Zugriff auf Steuerungsmodule in dem Steuerungsraum 20 zu gewähren.

Die Betriebsweise der Handhabungsvorrichtung 70 ist im Stand der Technik generell bekannt. Daher wird diese im Folgenden nur kurz beschrieben.

Zu bearbeitende Werkstücke werden auf gestapelten Werkstückträgerpaletten 96 über die Flügeltüren 78 in das Bereitstellungsmodul 90 eingefahren. Der Knickarm-Roboter 86 entnimmt jeweils ein Werkstück von dem Palettenstapel 92 und übergibt dieses entweder an das Bearbeitungsmodul 88 zur Vorbearbeitung oder unmittelbar an einen Werkstückwechsler 101 des Handhabungsportals 100. Das Werkstück wird dann mittels des Handhabungsportals 100 zu der zugeordneten (nicht dargestellten) Werkzeugmaschine überführt. Dort wird es von dem Werkstückwechsler 101 zur Bearbeitung eingespannt. Hiernach oder gleichzeitig hiermit wird ein bereits bearbeitetes Werkstück von dem Werkstückwechsler 101 zurück zu der Handhabungsvorrichtung 70 transportiert. Dort wird es von dem Knickarm-Roboter 86 übernommen. Danach wird es entweder unmittelbar auf den zweiten Palettenstapel 94 abgelegt oder zuvor einer Nachbearbeitung in einem Bearbeitungsmodul 88 unterzogen.

Es versteht sich, dass neben dem dargestellten Bearbeitungsmodul 88 weitere Bearbeitungsmodule auf der Prozessplatte 38 und/oder an der Schnittstellenplatte 32 festgelegt werden können.

Die gezeigte Handhabungsvorrichtung 70 ist, wie gesagt, nur ein Beispiel einer Vielzahl von unterschiedlichsten Handhabungsvorrichtungen, die sich auf der Grundlage des Grundgestells 10 aufbauen lassen.

So versteht sich, dass das Handhabungsportal 100 in gleicher Weise zur anderen Seite aus der Handhabungsvorrichtung 70 austreten kann. Ferner kann das Handhabungsportal 100 auch zur Verkettung von Werkzeugmaschinen durch die Handhabungsvorrichtung 70 hindurchtreten und zwei gegenüberliegende Werkzeugmaschinen miteinander verketten.

Ferner versteht sich, dass die Handhabungsvorrichtung 70 auch vollkommen ohne Handhabungsportal 100 aufgebaut werden kann, dann nämlich, wenn die Handhabungsvorrichtung 70 in unmittelbarer Nachbarschaft zu einer Werkzeugmaschine aufgestellt wird. Dann kann beispielsweise ein Handhabungsmodul, wie ein Knickarm-Roboter, am seitlichen äußeren Rand der Schnittstellenplatte 32 montiert werden, um Werkstücke unmittelbar an die Werkzeugmaschine zu übergeben bzw. sie dort einzuspannen.

In gleicher Weise versteht sich, dass die Bereitstellung von Werkstücken über Schubladenmodule erfolgen kann, die an Stelle des gezeigten Paletten-Bereitstellungsmoduls 90 in dem Bereitstellungsraum 55 angeordnet werden. Derartige Schubladenmodule sind im Stand der Technik an sich bekannt.

Auch versteht sich, dass zur Bereitstellung von Werkstücken Stau- oder Taktbänder vorgesehen werden können, die entweder seitlich parallel oder hinter der Rückwand 18 an der Handhabungsvorrichtung 70 vorbeigeführt werden, derart, dass ein entsprechend positionierter Knickarm-Roboter die Werkstücke leicht hiervon entnehmen kann.

Auf Grund des flexiblen modularen Aufbaus, basierend auf dem erfindungsgemäßen Grundgestell 10, ist es möglich, eine Handhabungsvorrichtung 70 vor Ort auf einfache Weise umzurüsten, um die Handhabungsvorrichtung für eine neue Applikation einzurichten. Beispielsweise kann es vorkommen, dass eine Werkzeugmaschine gegen eine solche einer neueren Generation ausgetauscht wird. Dann müssen gegebenenfalls die Handhabungsmodule und Bearbeitungsmodule in der Handhabungsvorrichtung 70 versetzt oder ausgetauscht werden. Dies stellt auf Grund der flexiblen Schnittstellenplatte 32 und der flexiblen Prozessplatte 38 kein Problem dar.

Demzufolge ist es für derartige Umrüstarbeiten nicht notwendig, die Handhabungsvorrichtung zum Hersteller zu transportieren.

Fig. 5 zeigt schematisch die verschiedenen Möglichkeiten des Bereitstellens von Werkstücken (einfacher Pfeil) sowie des Zuführens von Werkstücken zu einer zugeordneten Werkzeugmaschine (Doppelpfeil).

## Patentansprüche

1. Grundgestell (10) für eine modular aufbaubare Handhabungsvorrichtung (70), insbesondere für eine Automationszelle (70), die zum Verbund mit wenigstens einer Werkzeugmaschine ausgelegt ist, mit
- einer Vorderwand (12), einer Rückwand (18) und Seitenwänden (14, 16), die einen Steuerungsraum (20) für eine Steuereinrichtung einschließen, wobei oberhalb des Steuerungsraumes (20) eine Prozessplattform (22) eingerichtet ist,
**dadurch gekennzeichnet, dass**
- die Vorderwand (12) wenigstens eine mechanische Schnittstelle (50) zum Festlegen eines Bereitstellungsmoduls (90) aufweist, das zum Bereitstellen von Werkstücken dient, und
- die Rückwand (18) einen oberen Rückwandteil (24) aufweist, der über die Prozessplattform (22) hinausragt und an seiner zur Prozessplattform (22) weisenden Vorderseite eine erste Mehrzahl von mechanischen Schnittstellen (34) zum örtlich variablen Festlegen eines Prozessmoduls (86; 100) zum Handhaben und/oder Bearbeiten von bereitgestellten Werkstücken aufweist, wobei das obere Rückwandteil (24) ferner eine Öffnung (30) aufweist, die oberhalb der Prozessplattform (22) angeordnet ist.

2. Grundgestell nach Anspruch 1, wobei das obere Rückwandteil (24) als Rahmen ausgebildet ist, an dessen Vorderseite eine Schnittstellenplatte (32) festgelegt ist, die die erste Mehrzahl von mechanischen Schnittstellen (34) aufweist.

3. Grundgestell nach Anspruch 1 oder 2, wobei das obere Rückwandteil (24) als Rahmen ausgebildet ist und wenigstens ein Rahmenteil (26, 28, 29) als Hohlprofil zur Aufnahme von Kabelsträngen (44) ausgebildet ist.

4. Grundgestell nach Anspruch 3, wobei zwei seitliche Rahmenpfosten (26, 28) des oberen Rückwandteils (24) als Hohlprofile zur Aufnahme von Kabelsträngen (44) ausgebildet sind.

5. Grundgestell nach Anspruch 4, wobei die Rückwandöffnung (30) seitlich durch die Rahmenpfosten (26, 28) begrenzt ist.

6. Grundgestell nach einem der Ansprüche 3 - 5, wobei wenigstens ein Hohlprofil (26, 28, 29) des oberen Rückwandteils (24) eine Kabelöffnung (42) zur Durchführung eines Kabelstranges (44) aufweist, um den Steuerungsraum (20) mit einem Prozessmodul (80, 86; 100) zu verbinden.

7. Grundgestell nach Anspruch 5 und 6, wobei Kabelöffnungen (42) an jenen Seiten der Rahmenpfosten (26, 28) vorgesehen sind, die zur Rückwandöffnung (30) hin weisen.

8. Grundgestell nach einem der Ansprüche 1 - 7, wobei auf der Prozessplattform (22) eine Prozessplatte (38) angeordnet ist, die eine zweite Mehrzahl von mechanischen Schnittstellen (40) zum örtlich variablen Festlegen eines Prozessmoduls (88) zum Handhaben und/oder Bearbeiten von bereitgestellten Werkstücken aufweist.

9. Grundgestell nach Anspruch 8, wobei die Prozessplatte (38) durch die Öffnung (30) in der Rückwand (18) hindurch montierbar ist.

10. Grundgestell nach einem der Ansprüche 1 - 9, wobei an der zur Prozessplattform (22) weisenden Vorderseite des oberen Rückwandteils (24) eine nach vorn auskragende Konsole (80) montiert ist, deren Unterseite wenigstens eine weitere mechanische Schnittstelle zum Festlegen eines Prozessmoduls (86) zum Handhaben und/oder Bearbeiten von bereitgestellten Werkstücken aufweist.

11. Grundgestell nach einem der Ansprüche 1 - 10, wobei sich von der Vorderwand (12) zwei Füße (52, 54) nach vorn erstrecken.

12. Grundgestell nach Anspruch 11, wobei oberhalb der Füße (52, 54) und in Verlängerung der Seitenwände (14, 16) Einfassungswände (56, 57) angeordnet sind, die einen Bereitstellungsraum (55) für ein Bereitstellungsmodul (90) seitlich einfassen.

13. Grundgestell nach einem der Ansprüche 1 - 12, wobei an der Vorderwand (12) eine Kabelöffnung (46) zur Durchführung eines Kabelstranges (48) vorgesehen ist, um ein Bereitstellungsmodul (90) mit dem Steuerungsraum (20) zu verbinden.

14. Handhabungsvorrichtung (70), insbesondere Automationszelle (70), die zum Verbund mit wenigstens einer Werkzeugmaschine ausgelegt ist, mit einem Grundgestell (10) nach einem der Ansprüche 1 - 13.

15. Handhabungsvorrichtung nach Anspruch 14, wobei das Grundgestell (10) ein Gehäuse (72, 74, 82) lagert, das einen Bereitstellungsraum (55) vor der Vorderwand (12) und einen Prozessraum (23) oberhalb der Prozessplattform (22) einschließt.

16. Handhabungsvorrichtung nach Anspruch 15, wobei das Gehäuse (72, 74, 82) einen vor dem Bereitstellungsraum (55) angeordneten Türrahmen (72) aufweist, an dem eine Tür (74) gelagert ist.

17. Handhabungsvorrichtung nach Anspruch 15 oder 16, wobei das Gehäuse (72, 74, 82) wenigstens eine Seitenabdeckung (82) zum seitlichen Abdecken des Prozessraumes (23) aufweist.

## Claims

1. A base framework (10) for a manipulating apparatus (70) which can be constructed in a modular manner, in particular for an automation cell (70) which is designed for being combined with at least one machine tool, comprising
- a front wall (12), a rear wall (18) and side walls (14, 16) which enclose a control space (20) for a control device, a process platform (22) being set up above the control space (20),
**characterized by**
- the front wall (12) having at least one mechanical interface (50) for fixing a supply module (90) which serves to supply workpieces, and
- the rear wall (18) having a top rear-wall part (24) which projects beyond the process platform (22) and, on its front side pointing towards the process platform (22), has a first plurality of mechanical interfaces (34) for the locally variable fixing of a process module (86; 100) for manipulating and/or processing supplied workpieces, the top rear-wall part (24) also having an opening (30) which is arranged above the process platform (22).

2. The base framework according to Claim 1, the top rear-wall part (24) being designed as a frame, on the front side of which an interface panel (32) is fixed which has the first plurality of mechanical interfaces (34).

3. The base framework according to Claim 1 or 2, the top rear-wall part (24) being designed as a frame, and at least one frame part (26, 28, 29) being designed as a hollow profile for accommodating cable looms (44).

4. The base framework according to Claim 3, two lateral frame posts (26, 28) of the top rear-wall part (24) being designed as hollow profiles for accommodating cable looms (44).

5. The base framework according to Claim 4, the rear-wall opening (30) being defined laterally by the frame posts (26, 28).

6. The base framework according to one of Claims 3 to 5, at least one hollow profile (26, 28, 29) of the top rear-wall part (24) having a cable opening (42) for passing through a cable loom (44) in order to connect the control space (20) to a process module (80, 86; 100).

7. The base framework according to Claims 5 and 6, cable openings (42) being provided on those sides of the frame posts (26, 28) which point towards the rear-wall opening (30).

8. The base framework according to one of Claims 1 to 7, a process plate (38) being arranged on the process platform (22) and having a second plurality of mechanical interfaces (40) for the locally variable fixing of a process module (88) for manipulating and/or processing supplied workpieces.

9. The base framework according to Claim 8, it being possible for the process plate (38) to be fitted through the opening (30) in the rear wall (18).

10. The base framework according to one of Claims 1 to 9, a bracket (80) projecting forwards being fitted on the front side, pointing towards the process platform (22), of the top rear-wall part (24), the underside of this bracket (80) having at least one further mechanical interface for fixing a process module (86) for manipulating and/or processing supplied workpieces.

11. The base framework according to one of Claims 1 to 10, two feet (52, 54) extending forwards from the front wall (12).

12. The base framework according to Claim 11, enclosing walls (56, 57) being arranged above the feet (52, 54) and in extension of the side walls (14, 16), these enclosing walls (56, 57) laterally enclosing a supply space (55) for a supply module (90).

13. The base framework according to one of Claims 1 to 12, a cable opening (46) for passing through a cable loom (48) being provided on the front wall (12) in order to connect a supply module (90) to the control space (20).

14. The manipulating apparatus (70), in particular an automation cell (70), which is designed for being combined with at least one machine tool, comprising a base framework (10) according to one of Claims 1 to 13.

15. The manipulating apparatus according to Claim 14, the base framework (10) supporting a housing (72, 74, 82) which encloses a supply space (55) in front of the front wall (12) and a process space (23) above the process platform (22).

16. The manipulating apparatus according to Claim 15, the housing (72, 74, 82) having a door frame (72) which is arranged in front of the supply space (55) and on which a door (74) is mounted.

17. The manipulating apparatus according to Claim 15 or 16, the housing (72, 74, 82) having at least one side cover (82) for laterally covering the process space (23).

## Revendications

1. Structure de base (10) pour un dispositif de manutention (70) de conception modulaire, en particulier pour une cellule d'automation (70), qui est conçue pour être reliée à au moins une machine-outil, comportant :
- une paroi avant (12), une paroi arrière (18) et des parois latérales (14, 16) qui délimitent entre elles une enceinte de commande (20) pour une unité de commande, une plate-forme de service (22) étant installée au-dessus de l'enceinte de commande (20),
**caractérisée en ce que**
- la paroi avant (12) comporte au moins une interface mécanique (50) destinée à la fixation d'un module de mise à disposition (90) qui est utilisé pour la mise à disposition des pièces à usiner, et
- la paroi arrière (18) comporte une partie supérieure (24) de paroi arrière, qui s'élève au-dessus de la plate-forme de service (22) et qui, sur sa face avant orientée vers la plate-forme de service (22), comporte une première pluralité d'interfaces mécaniques (34) pour la fixation variable localement d'un module de service (86 ; 100) destiné à la manipulation et/ou à l'usinage des pièces mises à disposition, la partie supérieure (24) de la paroi arrière comportant en outre une ouverture (30) qui est disposée au-dessus de la plate-forme de service (22).

2. Structure de base selon la revendication 1, dans laquelle la partie supérieure (24) de la paroi arrière est conçue sous forme de cadre contre la face avant duquel est fixé un panneau d'interface (32), qui comporte la première pluralité d'interfaces mécaniques (34).

3. Structure de base selon la revendication 1 ou 2, dans laquelle la partie supérieure (24) de la paroi arrière est conçue sous forme de cadre et au moins une partie du cadre (26, 28, 29) est conçue sous forme de profilé creux destiné à recevoir des faisceaux de câbles (44).

4. Structure de base selon la revendication 3, dans laquelle deux colonnes latérales (26, 28) du cadre formé par la partie supérieure (24) de la paroi arrière sont conçues sous forme de profilés creux destinés à recevoir des faisceaux de câbles (44).

5. Structure de base selon la revendication 4, dans laquelle l'ouverture (30) dans la paroi arrière est délimitée latéralement par les colonnes (26, 28) du cadre.

6. Structure de base selon l'une quelconque des revendications 3 à 5, dans laquelle au moins un profilé creux (26, 28, 29) de la partie supérieure (24) de la paroi arrière comporte un orifice pour câbles (42) pour le passage d'un faisceau de câbles (44) en vue de relier l'enceinte de commande (20) à un module de service (80, 86 ; 100).

7. Structure de base selon les revendications 5 et 6, dans laquelle il est prévu des orifices pour câbles (42) dans les colonnes (26, 28) du cadre, à savoir sur leurs côtés orientés vers l'ouverture (30) dans la paroi arrière.

8. Structure de base selon l'une des revendications 1 à 7, dans laquelle un plateau de service (38) est agencé sur la plate-forme de service (22) et comporte une deuxième pluralité d'interfaces mécaniques (40) pour la fixation variable localement d'un module de service (88) destiné à la manipulation et/ou à l'usinage des pièces mises à disposition.

9. Structure de base selon la revendication 8, dans laquelle le plateau de service (38) est destiné à être monté à travers l'ouverture (30) dans la paroi arrière (18).

10. Structure de base selon l'une des revendications 1 à 9, dans laquelle sur la face avant, orientée vers la plate-forme de service (22), de la partie supérieure (24) de la paroi arrière est montée une console (80) en porte-à-faux vers l'avant, dont le côté inférieur comporte au moins une autre interface mécanique destinée à la fixation d'un module de service (86) pour la manipulation et/ou l'usinage des pièces mises à disposition.

11. Structure de base selon l'une quelconque des revendications 1 à 10, dans laquelle deux pieds (52, 54) s'étendent vers l'avant en partant de la paroi avant (12).

12. Structure de base selon la revendication 11, dans laquelle, au-dessus des pieds (52, 54) et dans le prolongement des parois latérales (14, 16), sont agencées des parois d'encadrement (56, 57), qui délimitent latéralement une enceinte de mise à disposition (55) pour un module de mise à disposition (90).

13. Structure de base selon l'une des revendications 1 à 12, dans laquelle un orifice pour câbles (46), par lequel passe un faisceau de câbles (48), est prévu sur la paroi avant (12) pour relier un module de mise à disposition (90) à l'enceinte de commande (20).

14. Dispositif de manutention (70), en particulier cellule d'automation (70), qui est conçu pour être relié à au moins une machine-outil, comportant une structure de base (10) selon l'une des revendications 1 à 13.

15. Dispositif de manutention selon la revendication 14, dans lequel la structure de base (10) reçoit un carter (72, 74, 82) qui délimite une enceinte de mise à disposition (55) devant la paroi avant (12) et une enceinte de service (23) au-dessus de la plate-forme de service (22).

16. Dispositif de manutention selon la revendication 15, dans lequel le carter (72, 74, 82) comporte un encadrement de porte (72), qui est agencé devant l'enceinte de mise à disposition (55) et contre lequel est fixée une porte (74).

17. Dispositif de manutention selon la revendication 15 ou 16, dans lequel le carter (72, 74, 82) comporte au moins une protection latérale (82), destinée à fermer latéralement l'enceinte de service (23).
